# EUROPEAN PATENT APPLICATION

(11) **EP 3 037 751 A1**
(43) Date of publication of application: **29.06.2016**
(21) Application number: 15200502.1
(22) Date of filing: 16.12.2015
(51) Int. Cl.: F25D 17/04, F16K 15/03

(54) **NON-RETURN VALVE FOR THE AIR FLOW FROM A REFRIGERATOR COMPARTMENT AND REFRIGERATION APPARATUS COMPRISING SAID VALVE**

(30) Priority: 23.12.2014 IT PR20140100
(71) Applicant: Indesit Company S.p.A., 60044 Fabriano (AN) (IT)
(72) Inventor: CORBO, Luca, 81044 Tora e Piccilli (CE) (IT)
(74) Representative: Santonicola, Paolo

(57) **Abstract**

A non-return valve (100) for the air flow from a refrigerator compartment (2), comprising:
a perimeter frame (101) delimiting an opening (102) for passage of the air flow toward the refrigerator compartment (2);
two membranes (103a, 103b) constrained to opposite sections (106, 107) of the perimeter frame (101) in such a manner as to open or close the opening (102) by completing rotations in opposite directions.

## Description

The present invention relates to a non-return valve for the air flow from a refrigerator compartment and a refrigeration apparatus comprising said valve, in particular for use for cooling and storing foods, preferably for domestic applications.

On the market there are various models of fridge freezers, i.e. appliances provided with a refrigerator compartment and a freezer compartment. For example, in a no-frost fridge freezer, the air, refrigerated by suitable cooling means, is moved by a fan that conveys it to a conduit, which channels the air into the refrigerator compartment.

The flow of air through the conduit is controlled by the activation of the fan. When the fan is running, the refrigerated air passes through the conduit and arrives at the refrigerator compartment, so as to bring it to a lower temperature. By contrast, when the fan is not operating, the passage of refrigerated air toward the refrigerator compartment is interrupted.

The conduit is also provided with a non-return valve for the air flow from the refrigerator compartment. For example, patent EP2090854, in the name of the Applicant, proposes some embodiments of a membrane-type non-return valve.

As is well known, a non-return valve prevents moist air from flowing back from the refrigerator compartment, that is, from returning into the conduit when the fan is switched off, with the risk of such air condensing or freezing inside the conduit itself.

The non-return valve comprises a perimeter frame applied to a section of the conduit and a membrane made of a silicone material, which has an edge constrained to the perimeter frame.

When the fan is running and the air flows along the conduit to the refrigerator compartment, the membrane is partly lifted by the air, allowing it to flow.

When the fan is switched off and the air thus stops flowing to the refrigerator compartment, the membrane abuts on the perimeter frame in such a way as to occlude the conduit and prevent the backflow of air from the refrigerator compartment to the cooling means.

The main disadvantage of the solution proposed in EP2090854 is tied to the fact that the membrane has a surface area equal to the section of the conduit, so it is heavy and requires a considerable air flow in order to be lifted.

Patent EP2090854 also proposes a variant embodiment comprising two adjacent membranes constrained to the same side of the perimeter frame, each of which is intended to control flow through half of the section of the conduit.

In this variant, each membrane has a surface area, and thus weight, that is halved. Therefore, smaller air flows are sufficient to lift the membrane.

However, this embodiment, too, has some disadvantages.

Firstly, when the membranes are subjected to the flow of refrigerated air towards the refrigerator compartment, they are only partly lifted, so that there are pressure drops due to the fact that the air flow is diverted.

Furthermore, each membrane, on being subjected to the force of the air coming from the cooling means, rotates about the constraining axis with an arm equal to the linear dimensions of the membrane, resulting in a high angular momentum, which expresses the inertia of the membranes to lifting.

In this context, the technical task at the basis of the present invention is to propose a non-return valve for the air flow from a refrigerator compartment and a refrigeration apparatus comprising said valve, which overcome the aforementioned disadvantages of the prior art.

In particular, it is an object of the present invention to provide a non-return valve for the air flow from a refrigerator compartment which minimizes the diversion of flow.

A further object of the present invention is to provide a refrigeration apparatus that is more reliable compared to the above-mentioned known solutions.

The stated technical task and specified objects are substantially achieved by a non-return valve for the air flow from a refrigerator compartment and a refrigeration apparatus comprising said valve, having structural and functional characteristics in accordance with the appended independent claims, further embodiments being identified in the appended and corresponding dependent claims.

Additional features and advantages of the present invention will become more apparent from the approximate, and hence non-limiting, description of a preferred but not exclusive embodiment of a non-return valve for the air flow from a refrigerator compartment and of a refrigeration apparatus comprising said valve, as illustrated in the accompanying drawings, in which:
figure 1 illustrates a refrigeration apparatus according to the present invention, in a sectional side view;
figure 2 illustrates a non-return valve for the air flow from a refrigerator compartment, with the membrane in the open configuration, according to the present invention, in a schematic perspective view;
figures 3 and 4 illustrate the valve of figure 2, respectively with the membrane in an open and a closed configuration, in a side view;
figure 5 illustrates the valve of figure 2, with the membrane in the closed configuration, in a view from above;
figure 6 illustrates a part (framework) of the valve of figure 2, in a view from above.

With reference to the figures, the number 1 denotes a refrigeration apparatus for cooling and storing, preferably per domestic applications.

The refrigeration apparatus 1 comprises a refrigerator compartment 2 and a freezer compartment 3 for storing foods.

Preferably, the temperature of the refrigerator compartment 2 is comprised between about 0°C and 10°C. Preferably, the temperature of the freezer compartment 3 is lower than about -15°C.

In the embodiment illustrated here, the refrigerator compartment 2 is positioned above the freezer compartment 3. In an unillustrated variant embodiment, the refrigerator compartment 2 is positioned below the freezer compartment 3.

The refrigeration apparatus 1 comprises a means 4 for cooling the air intended for the refrigeration of the refrigerator compartment 2 and a means 5 for moving the refrigerated air. For example, the cooling means 4 comprises a refrigeration circuit of a known type, in which a refrigerant fluid circulates.

Preferably, the means 5 for moving the refrigerated air consists in a fan which, on being activated, conveys the air to a conduit 6.

In particular, the conduit 6 extends from the cooling means 4 to the refrigerator compartment 2.

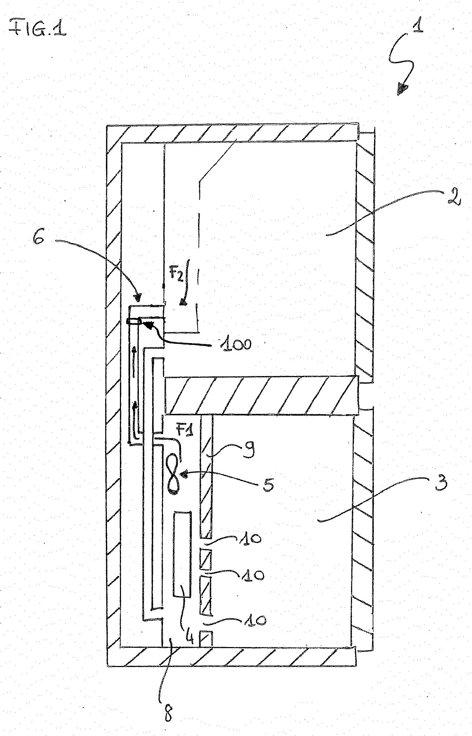

In this context, the flow of refrigerated air that goes from the cooling means 4 to the refrigerator compartment 2 is called "direct flow" and is indicated in figure 1 with the letter F1. The air flow from the refrigerator compartment 2 to the cooling means 4 is instead called "backflow" and is indicated in figure 1 with the letter F2.

Preferably, both the cooling means 4 for cooling the air and the fan 5 are disposed in a chamber 8 adjacent to the freezer compartment 3.

The chamber 8 is separated from the freezer compartment 3 by means of a wall 9 having a plurality of slits 10. The fan 5, on being activated, also conveys air to the freezer compartment 3 through the slits 10 of the dividing wall 9.

The refrigeration apparatus 1 comprises a non-return valve 100 for the air flow from refrigerator compartment 2. In particular, the non-return valve 100 is operatively active on the conduit 6 so as to prevent the backflow F2. The non-return valve 100 comprises a perimeter frame 101 delimiting an opening 102 for passage of the air flow and at least two membranes 103a, 103b partially constrained to the perimeter frame 101.

The perimeter frame 101 is applied transversely to the conduit 6, that is, on a section of the conduit 6.

The term membrane means a layer of flexible material, for example an elastic one. Preferably, the membranes 103a, 103b of the non-return valve 100 are made of a silicone material. In an alternative embodiment, the membranes 103a, 103b are made with a siliconized protective support and a coating film (for example, calendered plasticized PVC).

Preferably, each of the two membranes 103a, 103b has a first edge 104 constrained to the perimeter frame 101. In this manner, the two membranes 103a, 103b can rotate between at least a closed configuration, wherein they jointly occlude the opening 102 so as to prevent the return of air (i.e. to prevent the backflow F2), and at least an open configuration, wherein a second free edge 105 of each membrane 103a, 103b is distanced from the opening 102 so as to enable the passage of air to the refrigerator compartment 2 (i.e. to enable the direct flow F1).

Originally, the first edges 104 of each membrane 103a, 103b are constrained to opposite sections 106, 107 of the perimeter frame 101 in such a manner that in passing from the closed configuration to the open configuration, the two membranes 103a, 103b complete rotations in opposite directions.

The first edges 104 of the two membranes 103a, 103b are constrained to the opposite sections 106, 107 with joining means of a known type, for example inserts which may be inserted in corresponding seats fashioned in said sections.

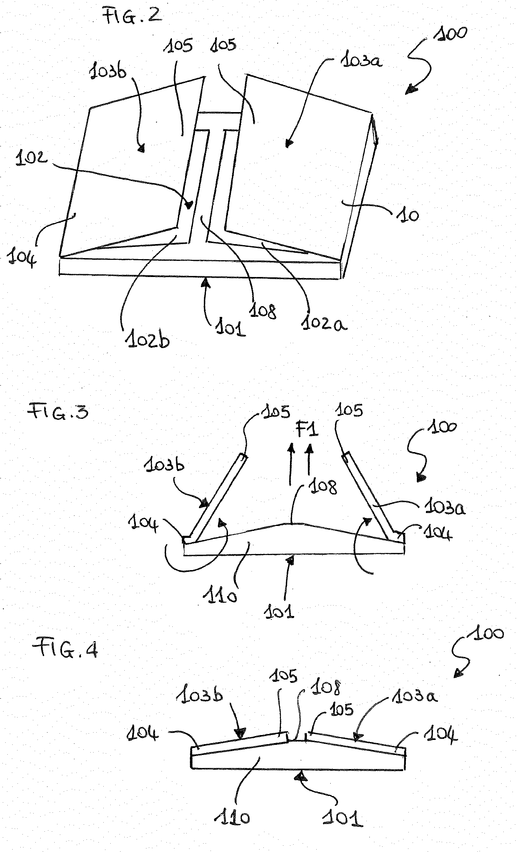

As can be seen in figure 4, when the membranes 103a, 103b are in the closed configuration, the second edges 105 are at the minimum distance. By contrast, when the membranes 103a, 103b are in the open configuration, the second edges 105 are distanced from each other, as can be seen in figure 3.

In other words, when passing from the closed configuration to the open configuration and vice versa, the membranes 103a, 103b act in the manner of hinged doors relative to the perimeter frame 101.

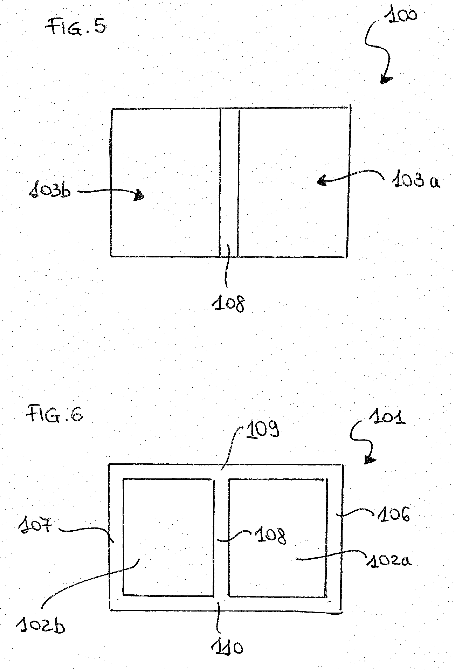

Preferably, the perimeter frame 101 defines a substantially rectangular opening 102 so that the opposite sections 106, 107, to which the first edges 104 of the membranes 103a, 103b are constrained, are parallel to each other and lie on opposite sides of this rectangle (see figure 6).

Preferably, the non-return valve 100 comprises a crosspiece 108 constrained to the perimeter frame 101 so as to divide the opening 102 into two parts. In this manner, one of the membranes (said first membrane 103a) is associated with a first part 102a of the opening 102, whilst the other membrane (called second membrane 103b) is associated with a second part 102b of the opening 102.

When the membranes 103a, 103b are in the closed configuration, the second edges 105 abut on the crosspiece 108, thereby preventing the passage of air through the opening 102.

Preferably, the two membranes 103a, 103b are equal in surface area.

In particular, the crosspiece 108 divides the opening 102 into two symmetrical parts 102a, 102b.

Preferably, the crosspiece 108 and the perimeter frame 101 form a single structural framework for the membranes 103a, 103b.

In a further embodiment (not illustrated), the framework comprises a grid which divides the opening 102 into a plurality of parts. For example, the grid has the shape of a cross and the opening 102 is divided into four parts.

The perimeter frame 101 comprises two additional opposite sections 109, 110. Preferably, each of the additional opposite sections 109, 110 is shaped so as to be convex in a central zone of the opening 102 relative to the direct flow F1. Consequently, in the closed configuration the membranes 103a, 103b are inclined relative to the planar extension of the opening 102. For example, the membranes 103a, 103b are inclined by an angle of between 0° and 30° relative to the planar extension of the opening 102.

In other words, when viewed in cross section, each of the additional sections 109, 110 has a top central portion at which the crosspiece 108 is engaged.

The operation of the refrigeration apparatus comprising the non-return valve proposed here is described below.

Let us consider the situation in which the fan 5 is running, so that air is conveyed to the conduit 6.

On being subjected to the direct flow F1, the membranes 103a, 103b are lifted. The direct flow F1 thus reaches the refrigerator compartment 2.

When the temperature reached in the refrigerator compartment 2 is sufficiently low, the fan 5 is stopped and the direct flow F1 is interrupted.

The membranes 103a, 103b take on the closed configuration (given the absence of the direct flow F1 which lifts them), so that they abut on the crosspiece 108 and prevent the passage of the backflow F2 through the opening 102.

From the description made, the characteristics of the non-return valve for the air flow from a refrigerator compartment and the refrigeration apparatus comprising said valve, according to the present invention, appear clear, as do the advantages thereof.

In the preferred embodiment, the structure with central symmetry (relative to the crosspiece) enables a direct flow that is substantially concentrated in the central zone of the opening, thus reducing pressure drops to a minimum.

It should also be noted that when the membranes are subjected to the direct flow they are lifted relative to the planar extension of the opening. However, this lifting - though modest - does not influence the diversion of the flow thanks to the fact that the opening has a central symmetry.

Finally, by virtue of the fact that the closed membranes are already inclined, the push necessary for opening them is further reduced.

## Claims

1. Non-return valve (100) for the air flow from a refrigerator compartment (2), comprising:
a perimeter frame (101) delimiting an opening (102) for passage of the air flow toward said refrigerator compartment (2);
at least two membranes (103a, 103b), each of which has a first edge (104) constrained to said perimeter frame (101) in such a manner that said membranes (103a, 103b) can rotate between at least a closed configuration, wherein they jointly occlude said opening (102) so as to prevent the backflow of air, and at least an open configuration, wherein a second free edge (105) of each one of said membranes (103a, 103b) is distanced from said opening (102) so as to enable the passage of air to the refrigerator compartment (2),
**characterized in that** the first edges (104) of each membrane (103a, 103b) are constrained to opposite sections (106, 107) of said perimeter frame (101) in such a manner that in passing from the closed configuration to the open configuration, the two membranes (103a, 103b) complete rotations in opposite directions.

2. Non-return valve (100) according to claim 1, wherein said second edges (105) are at the minimum distance when the membranes (103, 103b) are in the closed configuration and they are distanced from each other when the membranes (103a, 103b) are in the open configuration.

3. Non-return valve (100) according to claim 1 or 2, wherein said membranes (103a, 103b) act in the manner of hinged doors with respect to said perimeter frame (101).

4. Non-return valve (100) according to any one of the preceding claims, wherein the opening (102) defined by said perimeter frame (101) is substantially rectangular in shape, so that said opposite sections (106, 107), to which the first edges (104) of said membranes (103a, 103b) are constrained, are parallel to each other and lie on opposite sides of this rectangle.

5. Non-return valve (100) according to any one of the preceding claims, further comprising a crosspiece (108) constrained to said perimeter frame (101) so as to divide said opening (102) in two parts, in the closed configuration of said membranes (103a, 103b), the second edge (105) of each membrane (103a, 103b) abutting on said crosspiece (108).

6. Non-return valve (100) according to claim 5, wherein said crosspiece (108) and said perimeter frame (101) are part of a single structural framework.

7. Non-return valve (100) according to any one of the preceding claims, wherein said two membranes (103a, 103b) are equal in surface area.

8. Non-return valve (100) according to any one of the preceding claims, wherein said perimeter frame (101) comprises two additional opposite sections (109, 110) that are shaped so as to be convex in a central zone of said opening (102), so that in the closed configuration, said membranes (103a, 103b) are inclined with respect to the planar extension of the opening (102).

9. Refrigeration apparatus (1) comprising:
a refrigerator compartment (2);
means for cooling (4) air;
a conduit (6) suitable for setting the air cooling means (4) and said refrigerator compartment (2) in fluid communication;
movement means (5) for moving the refrigerated air and conveying it towards said conduit (6);
a non-return valve (100) according to any one of the preceding claims, said non-return valve (100) being operatively active on said conduit (6) so as to block the flow of air from the refrigerator compartment (2) to said cooling means (4).

10. Refrigeration apparatus (1) according to claim 9, wherein the perimeter frame (101) of said non-return valve (100) is applied transversely to said conduit (6).
